(19) Europäisches Patentamt
European Patent Office
Office européen des brevets

(11) Numéro de publication: **0 490 781 B1**

(12) **FASCICULE DE BREVET EUROPEEN**

(45) Date de publication de fascicule du brevet: **09.08.95**

(51) Int. Cl.$^6$: **A01N 25/04**, A01N 25/30

(21) Numéro de dépôt: **91420405.2**

(22) Date de dépôt: **15.11.91**

# (54) Suspensions phytosanitaires.

(30) Priorité: **10.12.90 FR 9015738**

(43) Date de publication de la demande: **17.06.92 Bulletin 92/25**

(45) Mention de la délivrance du brevet: **09.08.95 Bulletin 95/32**

(84) Etats contractants désignés: **AT BE CH DE DK ES FR GB GR IT LI LU NL SE**

(56) Documents cités:

| | |
|---|---|
| EP-A- 0 082 437 | EP-A- 0 088 049 |
| EP-A- 0 091 331 | EP-A- 0 341 126 |
| EP-A- 0 373 837 | DE-A- 2 241 667 |
| FR-A- 1 538 342 | FR-A- 2 335 153 |

**PATENT ABSTRACTS OF JAPAN vol. 5, no. 45 (C-48)(717) 25 Mars 1981**

**The Merck Index, 10ème ed. 1983, page 289**

(73) Titulaire: **RHONE-POULENC CHIMIE**
**25, Ouai Paul Doumer**
**F-92408 Courbevoie Cédex (FR)**

(72) Inventeur: **Fiard, Jean-Francois**
**14 Rue Guillaume Bertrand**
**F-75011 Paris (FR)**
Inventeur: **Prevotat, Marie-Luce**
**39, rue Blomet**
**F-75015 Paris (FR)**

(74) Mandataire: **Ricalens, François et al**
**RHONE-POULENC CHIMIE,**
**Direction de la Propriéte Industrielle,**
**25, quai Paul Doumer**
**F-92408 Courbevoie Cédex (FR)**

**EP 0 490 781 B1**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).

## Description

La présente invention concerne de nouvelles suspensions aqueuses phytosanitaires.

Les matières actives telles que les insecticides, les germicides, les herbicides, les fongicides, les acaricides, les nématicides, les molluscicides, les rodenticides, les attractifs, les répulsifs, les associations de plusieurs de ces composés, sont généralement insolubles dans l'eau.

Elles peuvent être mises en oeuvre habituellement sous forme de solutions dans des solvants organiques, ces solutions étant ensuite émulsionnées dans l'eau, lors de leur utilisation.

L'emploi de solvants, tels que les xylènes ou le kérosène, pose d'évidents problèmes de pollution de l'environnement.

Un autre mode de préparation des compositions de matières actives consiste en des dispersions aqueuses fluides appelées couramment "flowable" qui sont diluées lors de leur application.

Ces dispersions aqueuses contiennent un ou plusieurs tensio-actifs.

La prise en compte de plus en plus sérieuse des différents problèmes de pollution de l'environnement, conduit à la recherche de compositions phytosanitaires de moins en moins toxiques.

La présente invention contribue à cette évolution par l'utilisation d'un système tensio-actif constitué au moins en partie de composés non-toxiques, non-irritants et biodégradables.

Le caractère émulsifiant et dispersant des sucroglycérides est connu, pour préparer des systèmes dispersés aqueux de matières grasses.

Les sucroglycérides sont des mélanges de produits, obtenus par transestérification de triglycérides, naturels ou de synthèse, avec le saccharose. Ces mélanges contiennent des monoglycérides, des diglycérides, de faibles quantités de triglycérides non transestérifiés, des monoesters et diesters du saccharose.

Le brevet EP-A-0 091 331, qui décrit un procédé de préparation de sucroglycérides fluides, indique également que lesdits sucroglycérides ont des propriétés tensio-actives, qui peuvent être utilisées notamment pour la préparation d'émulsions d'huiles essentielles ou de lait maigre réengraissé. Aux sucroglycérides peuvent également être associées des lécithines et des huiles fluides.

Le brevet CH 423.442 décrit un procédé de préparation d'émulsions d'huiles ou de corps gras solides dans l'eau, utilisant comme système émulsifiant des sucroglycérides et une lécithine.

Des suspensions aqueuses de cristaux de palmitate de chloramphénicol ont été obtenues à l'aide d'un mélange "saccharose- ester d'acide gras" et d'un tensio-actif du type ester de sorbitan polyoxyéthyléné (DE-A-2 241 667).

Le document FR-A-1 538 342 vise un milieu de suspension aqueux de produits à activité biologique (produits phytosanitaires, désinfectants, antibiotiques) constitué d'un ester gras de saccharose (saccharoglycérides d'huile de palme), d'un condensat de formaldéhyde et d'acide alkylbenzène ou allkylnaphtalène sulfonique, et d'une bentonite.

Il est connu (EP-A-82 437) de préparer des suspensions concentrées de pesticides insolubles dans l'eau et de point de fusion supérieur à 40°C, à l'aide d'un phospholipide et d'un milieu solvant alcool ou éther.

La présente invention consiste à utiliser le pouvoir dispersant des sucroglycérides pour l'obtention de suspensions stables de matières actives phytosanitaires.

Elle vise une suspension aqueuse concentrée de matière active phytosanitaire solide, de point de fusion supérieur ou égal à 45°C et de solubilité dans l'eau à 20°C inférieure à 5g/l caractérisée en ce qu'elle comporte en outre au moins:

- des sucroglycérides et
- un triglycéride alcoxylé et/ou un acide gras alcoxylé et/ou un ester de sorbitan et/ou un ester de sorbitan alcoxylé,

De préférence, et notamment pour les suspensions les plus concentrées, c'est-à-dire généralement contenant plus de 30 % en poids de matière active par volume de suspension aqueuse, un agent mouillant est rajouté à ces suspensions.

Préférentiellement donc, l'invention consiste en une suspension aqueuse concentrée de matière active phytosanitaire solide, de point de fusion supérieur ou égal à 45°C et de solubilité dans l'eau à 20°C inférieure à 5g/l caractérisée en ce qu'elle comporte en outre au moins:

- des sucroglycérides et
- un triglycéride alcoxylé et/ou un acide gras alcoxylé et/ou un ester de sorbitan et/ou un ester de sorbitan alcoxylé,
  - un agent mouillant choisi parmi les sels anioniques de tensio-actifs et les alcools ou phénols alcoxylés, les tensio-actifs à base de silicone et les tensio-actifs fluorés,

Comme indiqué précédemment, les sucroglycérides proviennent de la transestérification de triglycérides par le saccharose.

Dans le présent texte, le terme "sucroglycérides" sera utilisé au pluriel afin d'indiquer qu'ils ne sont pas constitués par un seul composé chimique.

Comme triglycérides, on utilise généralement les triglycérides des acides aliphatiques, saturés ou insaturés, ayant au moins 4 atomes de carbone. De préférence les acides dont dérivent les triglycérides ont 10 à 20 atomes de carbone.

La préparation des sucroglycérides peut se faire à partir de triglycérides de synthèse, obtenus par réaction du glycérol et d'acides gras. Cependant, il est plus intéressant au plan économique de faire appel aux triglycérides naturels. Ces triglycérides naturels sont des mélanges de triglycérides.

Comme exemples de tels triglycérides naturels, on peut citer le saindoux, le suif, l'huile d'arachide, l'huile de beurre, l'huile de graine de coton, l'huile de lin, l'huile d'olive, l'huile de palme, l'huile de pépins de raisin, l'huile de poisson, l'huile de soja, l'huile de ricin, l'huile de colza, l'huile de coprah, l'huile de noix de coco.

Dans la présente invention, les sucroglycérides utilisés proviennent de préférence de l'huile de palme, du saindoux, de l'huile de coprah, du suif, de l'huile de colza, l'huile de ricin.

Ils se présentent, soit sous forme liquide comme les sucroglycérides de l'huile de colza ou de l'huile de ricin, soit sous forme de pâtes plus ou moins consistantes, se différenciant notamment par leur point de fusion :

| | |
|---|---|
| - sucroglycérides de saindoux | 47 à 50 °C, |
| - sucroglycérides de suif | 50 à 55 °C, |
| - sucroglycérides d'huile de palme | 55 à 58 °C |
| - sucroglycérides d'huile de coprah | 60 à 62 °C. |

Un mode opératoire de préparation des sucroglycérides est décrit dans le brevet FR-A-2 463 512.

La suspension aqueuse peut également comporter un phospholipide, en association avec les sucroglycérides, sans que sa présence revête un caractère critique.

Parmi les phospholipides qui peuvent être utilisés avec les sucroglycérides dans le cadre de l'invention, on peut citer les lécithines brutes d'origine végétale ou animale, telles que la lécithine de soja, la lécithine du jaune d'oeuf ainsi que toute fraction de lécithine.

La suspension aqueuse comprend généralement de 0,1 % à 5 % en poids de sucroglycérides, ou le cas échéant de sucroglycérides et de phospholipide, par rapport au volume total de la suspension, et de préférence de 0,2 % à 4 % en poids/volume.

Lorsqu'un phospholipide est présent avec les sucroglycérides, le rapport pondéral sucroglycérides/phospholipide est généralement de 3/1 à 1/3.

La matière active phytosanitaire utilisée dans la présente invention est sensiblement insoluble dans l'eau, ce qui signifie que sa solubilité dans l'eau à 20 °C est inférieure à 5 g/litre.

Il est bien évident que les matières actives utilisées doivent être stables vis-à-vis de l'eau.

Comme exemples non limitatifs de matières actives qui peuvent être mises en oeuvre dans les suspensions de l'invention, on peut citer :

- la deltaméthrine,
- le propham,
- la tétraméthrine,
- le furalaxyl,
- l'heptachlor,
- le propanil,
- l'oxadiazon,
- le triflumizole,
- la diméthaméthrine,
- l'atrazine,
- le diuron,
- le néburon,
- le linuron,
- l'isoproturon,
- la simazine,
- l'améthryne,

- le phenmdipham,
- le pendiméthalin.

Les suspensions de l'invention comprennent également au moins un triglycéride alcoxylé et/ou un acide gras alcoxylé et/ou un ester de sorbitan et/ou un ester de sorbitan alcoxylé, qui sont plus particulièrement choisis parmi les triglycérides éthoxylés, les acides gras éthoxylés, les esters de sorbitan et les esters de sorbitan éthoxylés.

Les triglycérides éthoxylés peuvent être des triglycérides d'origine végétale ou animale (tels que le saindoux, le suif, l'huile d'arachide, l'huile de beurre, l'huile de graine de coton, l'huile de lin, l'huile d'olive, l'huile de palme, l'huile de pépins de raisin, l'huile de poisson, l'huile de soja, l'huile de ricin, l'huile de colza, l'huile de coprah, l'huile de noix de coco) éthoxylés.

Les acides gras éthoxylés sont des esters d'acides gras (tels que par exemple l'acide oléïque, l'acide stéarique) éthoxylés.

Les esters de sorbitan sont des esters du sorbitol cyclisé d'acides gras de $C_{10}$ à $C_{20}$ comme l'acide laurique, l'acide stéarique ou l'acide oléïque. Ces esters de sorbitan peuvent également être éthoxylés.

Le terme triglycéride éthoxylé vise dans la présente invention, aussi bien les produits obtenus par éthoxylation d'un triglycéride par l'oxyde d'éthylène que ceux obtenus par transestérification d'un triglycéride par un polyéthylène-glycol.

De même le terme acide gras éthoxylé inclut aussi bien les produits obtenus par éthoxylation d'un acide gras par l'oxyde d'éthylène que ceux obtenus par estérification d'un polyéthylène-glycol par un acide gras.

Les triglycérides alcoxylés et/ou les acides gras alcoxylés et/ou les esters de sorbitan et/ou les esters de sorbitan alcoxylés représentent généralement de 0,1 à 3 % en poids par volume de la suspension et de préférence de 0,2 % à 2,8 % en poids/volume.

L'agent mouillant est un composé tel que défini dans la norme NF T 73-000.

Il s'agit notamment de sels anioniques de tensio-actifs, d'alcools alcoxylés ou d'alkylphénols alcoxylés représentés par les formules suivantes :

$R_1$-$SO_3$-M
$R_2$-$SO_4$-M
$R_3$-$(OE)_n$-H
$R_3$-$(OP)_n$-H
$R_3$-$(OE\text{-}OP)_n$-H
$R_4$-COONa

dans lesquelles :

- $R_1$ représente
  . un radical alkylphényle (tel que dodécylphényle),
  . un radical alkyle (tel que dodécyle),
  . un radical bis(octyloxycarbonyl)-1,2 éthyle, (de préférence bis(éthyl-2 hexyloxycarbonyl)-1,2 éthyle,
- $R_2$ représente
  . un radical alkyle (tel que dodécyle),
  . un radical alkylphénol éthoxylé (tel que nonylphénol éthoxylé avec 2 à 50 motifs OE),
  . un radical alkyle éthoxylé,
- $R_3$ représente
  . un radical alkylaryle (tel que nonylphényle, alkylnaphtyle),
  . un radical alkyle ayant 8 à 20 atomes de carbone, et de préférence de 10 à 14 atomes de carbone,
- n est un nombre de 4 à 12,
- $R_4$ représente un radical alkyle ayant 10 à 22 atomes de carbone,
- M représente Na, K, $NH_4$ ou un cation triéthanolammonium.

L'agent mouillant peut également être un tensio-actif à base de silicone tel que des copolymères de polydiméthylsiloxane et soit d'homopolymère d'éthylène-glycol, soit de copolymère d'éthylène-glycol et de propylène-glycol, ou un tensio-actif fluoré tel que des composés comportant une chaîne linéaire perfluorocarbonée, hydrophobe et oléophobe, et une partie hydrophile comportant par exemple un groupement sulfonique, acide ou neutralisé, un groupement carboxylique, un reste alcool éthoxylé.

Les suspensions comprennent généralement de 0,05 % à 1 % en poids d'agent mouillant par rapport au volume total de la suspension, et de préférence de 0,1 % à 0,8 % en poids/volume.

Les suspensions aqueuses comportent généralement de 30 % à 90 % en poids de matière active, par rapport au volume total de la suspension et de préférence de 40 % à 85 % en poids/volume.

La borne inférieure de cette zone de concentration n'est pas critique. Elle correspond simplement à la concentration qui est habituellement considérée comme minimale pour un stockage économiquement rentable des suspensions.

En effet, les suspensions de l'invention étant très stables dans le temps et pour une gamme large de températures (par exemple entre -10 °C et + 54 °C) il est préférable au plan économique de les conserver sous une forme concentrée et de ne les diluer qu'au moment de l'utilisation.

Un des avantages des suspensions de l'invention est précisément de pouvoir être diluées à la concentration souhaitée par l'utilisateur, c'est-à-dire habituellement 0,5 % à 2 %, sans problème de floculation ni de sédimentation, pour donner des suspensions diluées qui restent stables pendant une durée d'utilisation d'environ 24 heures.

Un autre avantage de ces suspensions réside en ce qu'elles possèdent un certain pouvoir anti-mousse, apporté par les sucroglycérides qu'elles contiennent.

Dans les exemples qui suivent et qui illustrent l'invention, les quantités des différents constituants des suspensions sont données en grammes pour l'obtention de 1000 $cm^3$ de suspension.

## EXEMPLES

Le mode opératoire utilisé est le même pour les différents exemples.

Il consiste tout d'abord à disperser par simple agitation, les sucroglycérides fondus, dans l'eau à 60 °C, à raison de 10 % en poids/poids.

Cette pré-dispersion permet le gonflement des sucroglycérides.

Dans les exemples, on indiquera simplement que les sucroglycérides sont mis en oeuvre sous forme de pré-dispersion à 10 % poids/poids dans l'eau.

On dissout dans' l'eau le triglycéride éthoxylé ou l'acide gras éthoxylé et l'agent mouillant.

On ajoute ensuite la pré-dispersion de sucroglycérides et éventuellement le composé antigel.

Puis on ajoute la matière active par petites fractions sous agitation ainsi que, le cas échéant, l'anti-mousse.

Le mélange est homogénéisé à l'aide d'une turbine, puis est broyé pendant quelques minutes dans un broyeur à billes (billes de verre de 1 mm de diamètre) jusqu'à obtention d'une granulométrie moyenne de la matière active de 3 à 4 micromètres.

On suit l'évolution du diamètre des particules à l'aide d'un granulomètre.

Le cas échéant, on ajoute un épaississant (gomme xanthane) et on agite encore pendant environ 30 minutes.

### Exemples 1 à 4 et essai comparatif A

Préparation de suspensions aqueuses d'atrazine.

L'atrazine est un herbicide connu, ayant un point de fusion de 175 °C et une solubilité dans l'eau à 25 °C de 0,028 g/l :

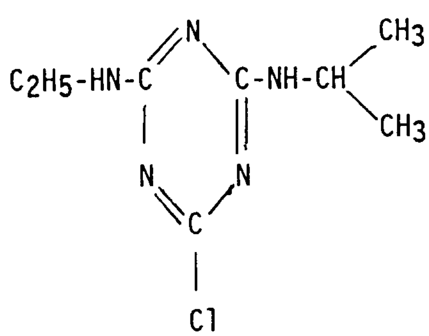

En suivant le mode opératoire décrit précédemment, on prépare quatre suspensions aqueuses selon l'invention d'atrazine ainsi qu'une suspension aqueuse d'atrazine ne comportant pas de triglycéride éthoxylé (essai comparatif A) dont les compositions respectives sont indiquées dans le tableau 1 ci-après.

Le tableau 1 indique également pour chacune des suspensions :

- le diamètre moyen des particules de la matière active (en micromètres)

- la valeur en secondes de la mesure de la vitesse d'écoulement de la suspension (avant addition de l'épaississant : gomme xanthane) selon la COUPE FORD n° 4 (CF n° 4)
- l'abréviation OE correspond au motif oxyéthylène dans la formule des triglycérides ou des acides gras éthoxylés.

L'antimousse utilisé est un polydiorganosiloxane.

Toutes les suspensions des exemples 1 à 4 ont été stables :

- plus de 2 mois à 45°C et
- plus de 2 mois en cycle de températures : 24 heures à + 45°C, 24 heures à - 5°C.

Par dilution à l'eau, elles ont conduit à des suspensions de 0,5 % à 2 % de matière active, sans floculation ni sédimentation pendant une durée d'utilisation d'environ 24 heures.

La suspension selon l'essai comparatif est également stable au stockage, mais son broyage est difficile et on observe une floculation dans l'eau à la dilution.

| Constituants de la suspension | Exemple 1 | Exemple 2 | Exemple 3 | Exemple 4 | Essai A |
|---|---|---|---|---|---|
| Atrazine | 500 g | 500 g | 500 g | 500 g | 500 g |
| Sucroglycérides d'huile de ricin à 10 % dans l'eau | 150 g | 80 g | 100 g | 100 g | 150 g |
| Huile de ricin éthoxylée (environ 33 OE) | 5 g | 4 g | 5 g | 5 g | 0 g |
| Huile de coprah éthoxylée (environ 27 OE) | 0 g | 0 g | 0 g | 5 g | 0 g |
| Dodécylbenzène sulfonate de sodium | 0 g | 2 g | 0 g | 0,5 g | 2 g |
| Lauryl sulfate de sodium | 2 g | 0 g | 2 g | 0 g | 0 g |
| Monopropylène-glycol | 70 g | 80 g | 70 g | 70 g | 80 g |
| Gomme xanthane à 2 % dans l'eau | 50 g | 50 g | 50 g | 50 g | 50 g |
| Antimousse | 1 g | 1 g | 1 g | 1 g | 1 g |
| Eau (quantité suffisante pour 1000 cm3) | 300 g | 450 g | 349 g | 345 g | 295 g |
| Diamètre moyen des particules (en micromètres) | 3,1 | 3,1 | 2,8 | 3,2 | — |
| CF n° 4 | 17 s | 15 s | 35 s | 22 s | — |

TABLEAU 1

Exemples 5 à 8

Préparation de suspensions aqueuses d'atrazine.

En suivant le mode opératoire décrit précédemment, on prépare quatre suspensions aqueuses d'atrazine, dont les compositions respectives et les propriétés sont indiquées dans le tableau 2 ci-après (avec les mêmes abréviations que pour le tableau 1).

De même que pour les suspensions des exemples 1 à 4, toutes les suspensions des exemples 5 à 8 ont été stables :

- plus de 2 mois à 45 °C et
- plus de 2 mois en cycle de températures : 24 heures à + 45 °C, 24 heures à - 5 °C.

Par dilution à l'eau, elles ont conduit à des suspensions de 0,5 % à 2 % de matière active, sans floculation ni sédimentation pendant une durée d'utilisation d'environ 24 heures.

| Constituants de la suspension | Exemple 5 | Exemple 6 | Exemple 7 | Exemple 8 |
|---|---|---|---|---|
| Atrazine | 500 g | 500 g | 500 g | 350 g |
| Sucroglycérides de suif à 10 % dans l'eau | 100 g | 50 g | 80 g | 50 g |
| Huile de ricin éthoxylée (environ 33 OE) | 5 g | 4 g | 0 g | 5 g |
| Huile de ricin éthoxylée (environ 18 OE) | 0 g | 0 g | 8 g | 0 g |
| Huile de coprah éthoxylée (environ 27 OE) | 0 g | 0 g | 8 g | 0 g |
| Dodécylbenzène sulfonate de sodium | 0 g | 2 g | 2 g | 0 g |
| Lauryl sulfate de sodium | 2 g | 0 g | 0 g | 2 g |
| Monopropylène-glycol | 80 g | 80 g | 80 g | 80 g |
| Gomme xanthane à 2 % dans l'eau | 50 g | 50 g | 40 g | 60 g |
| Antimousse | 1 g | 1 g | 1 g | 1 g |
| Eau (quantité suffisante pour 1000 cm3) | 338 g | 388 g | 354 g | 505 g |
| Diamètre moyen des particules (en micromètres) | 2,8 | 3,1 | 3,4 | 3,2 |
| CF n° 4 | 33 s | 20 s | 40 s | 10 s |

Tableau 2

Exemples 9 à 11

Préparation de suspensions aqueuses d'atrazine.

En suivant le mode opératoire décrit précédemment, on prépare trois suspensions aqueuses d'atrazine, dont les compositions respectives et les propriétés sont indiquées dans le tableau 3 ci-après (avec les

mêmes abréviations que pour le tableau 1).

De même que pour les suspensions des exemples 1 à 4, toutes les suspensions des exemples 9 à 11 ont été stables :

- plus de 2 mois à 45 °C et
- plus de 2 mois en cycle de températures : 24 heures à + 45 °C, 24 heures à - 5 °C.

Par dilution à l'eau, elles ont conduit à des suspensions de 0,5 % à 2 % de matière active, sans floculation ni sédimentation pendant une durée d'utilisation d'environ 24 heures.

| Constituants de la suspension | Exemple 9 | Exemple 10 | Exemple 11 |
|---|---|---|---|
| Atrazine | 500 g | 450 g | 500 g |
| Sucroglycérides de coprah à 10 % dans l'eau | 100 g | 0 g | 0 g |
| Sucroglycérides de beurre à 10 % dans l'eau | 0 g | 100 g | 0 g |
| Sucroglycérides de suif à 10 % dans l'eau | 0 g | 0 g | 250 g |
| Huile de ricin éthoxylée (environ 33 OE) | 5 g | 5 g | 5 g |
| Dodécylbenzène sulfonate de sodium | 2 g | 2 g | 2 g |
| Monopropylène-glycol | 80 g | 80 g | 60 g |
| Gomme xanthane à 2 % dans l'eau | 50 g | 50 g | 50 g |
| Antimousse | 1 g | 1 g | 1 g |
| Eau (quantité suffisante pour 1000 cm3) | 338 g | 380 g | 208 g |
| Diamètre moyen des particules (en micromètres) | 3,0 | 3,3 | 3,5 |
| CF n° 4 | 20 s | 15 s | 17 s |

Tableau 3

Essai comparatif B

Préparation d'une suspension aqueuse d'atrazine.

En suivant le mode opératoire décrit précédemment, on prépare une suspension aqueuse d'atrazine, dont la composition et les propriétés sont indiquées ci-dessous (avec les mêmes abréviations que pour le tableau 1) :

| | |
|---|---|
| - Atrazine | 500 g |
| - Esters phosphoriques (mono- et di-) du tristyrylphénol éthoxylé (16 OE) neutralisés par la triéthanolamine | 20 g |
| - Nonylphénol éthoxylé (10 OE) | 5 g |
| - Monopropylène-glycol | 80 g |
| - Gomme xanthane à 2 % dans l'eau | 50 g |
| - Antimousse | 1 g |
| - Eau qsp 1000 $cm^3$ | 420 g |
| Diamètre moyen des particules (en micromètres) | 3,6 |
| CF n° 4 | 18 s |

De même que pour les suspensions des exemples 1 à 4, la suspension de l'essai B a été stable :

- plus de 2 mois à 45 ° C et
- plus de 2 mois en cycle de températures : 24 heures à + 45 ° C, 24 heures à - 5 ° C.

Par dilution à l'eau, elles ont conduit à des suspensions de 0,5 % à 2 % de matière active, sans floculation ni sédimentation pendant une durée d'utilisation d'environ 24 heures.

On note qu'avec les compositions selon l'invention comportant des sucroglycérides non-toxiques et biodégradables, on arrive à obtenir la même stabilité à forte concentration de matière active qu'avec les meilleures suspensions selon l'art antérieur.

Exemples 12 à 15

Préparation de suspensions aqueuses de diuron.

Le diuron est un herbicide connu, ayant un point de fusion de 158 ° C et une solubilité dans l'eau à 25 ° C de 0,042 g/l :

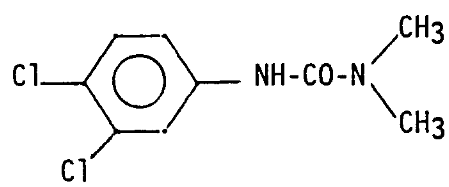

En suivant le mode opératoire décrit précédemment, on prépare quatre suspensions aqueuses selon l'invention de diuron dont les compositions respectives sont indiquées dans le tableau 4 ci-après (avec les mêmes abréviations que pour le tableau 1).

De même que pour les suspensions des exemples 1 à 4, toutes les suspensions des exemples 12 à 15 ont été stables :

- plus de 2 mois à 45 ° C et
- plus de 2 mois en cycle de températures : 24 heures à + 45 ° C, 24 heures à - 5 ° C.

Par dilution à l'eau, elles ont conduit à des suspensions de 0,5 % à 2 % de matière active, sans floculation ni sédimentation pendant une durée d'utilisation d'environ 24 heures.

| Constituants de la suspension | Exemple 12 | Exemple 13 | Exemple 14 | Exemple 15 |
|---|---|---|---|---|
| Diuron | 600 g | 600 g | 600 g | 550 g |
| Sucroglycérides d'huile de ricin à 10 % dans l'eau | 100 g | 150 g | 150 g | 100 g |
| Huile de ricin éthoxylée (environ 33 OE) | 5 g | 8 g | 11 g | 5 g |
| Nonylphénol éthoxypropoxylé | 0 g | 0 g | 0 g | 2 g |
| Nonylphénol éthoxylé (environ 12 OE) | 0 g | 3 g | 0 g | 0 g |
| Nonylphénol éthoxylé (environ 8 OE) | 5 g | 0 g | 0 g | 0 g |
| Nonylphénol éthoxylé (environ 10E) | 0 g | 0 g | 3 g | 3 g |
| Sodiosulfo-succinate de dioctyle | 0 g | 0 g | 1 g | 0 g |
| Monopropylène-glycol | 70 g | 70 g | 70 g | 70 g |
| Gomme xanthane à 2 % dans l'eau | 50 g | 50 g | 50 g | 50 g |
| Antimousse | 1 g | 1 g | 1 g | 1 g |
| Eau (quantité suffisante pour 1000 cm3) | 370 g | 318 g | 314 g | 402 g |
| Diamètre moyen des particules (en micromètres) | 3,8 | 3,7 | 3,5 | 3,3 |
| CF n° 4 | 35 s | 30 s | 28 s | 27 s |

TABLEAU 4

Exemples 16 à 20

Préparation de suspensions aqueuses de diuron.

En suivant le mode opératoire décrit précédemment, on prépare cinq suspensions aqueuses selon l'invention de diuron dont les compositions respectives sont indiquées dans le tableau 5 ci-après (avec les mêmes abréviations que pour le tableau 1).

De même que pour les suspensions des exemples 1 à 4, toutes les suspensions des exemples 16 à 20 ont été stables :

- plus de 2 mois à 45 ° C et
- plus de 2 mois en cycle de températures : 24 heures à + 45 ° C, 24 heures à - 5 ° C.

Par dilution à l'eau, elles ont conduit à des suspensions de 0,5 % à 2 % de matière active, sans floculation ni sédimentation pendant une durée d'utilisation d'environ 24 heures.

| Constituants de la suspension | Exemple 16 | Exemple 17 | Exemple 18 | Exemple 19 | Exemple 20 |
|---|---|---|---|---|---|
| Diuron | 600 g | 580 g | 640 g | 640 g | 640 g |
| Sucroglycérides d'huile de coprah à 10 % dans l'eau | 150 g | 145 g | 140 g | 140 g | 140 g |
| Huile de ricin éthoxylée (environ 33 OE) | 5 g | 0 g | 0 g | 5 g | 5 g |
| Huile de ricin éthoxylée (environ 18 OE) | 0 g | 5 g | 5 g | 0 g | 0 g |
| Nonylphénol éthoxylé (environ 10 OE) | 5 g | 3 g | 4 g | 5 g | 3 g |
| Alcool gras en C11 éthoxylé (environ 7 OE) | 0 g | 0 g | 0 g | 0 g | 5 g |
| Dodécylbenzène sulfonate de sodium | 3 g | 3 g | 2 g | 0 g | 0 g |
| Sodiosulfo-succinate de dioctyle | 0 g | 0 g | 0 g | 2 g | 0 g |
| Monopropylène-glycol | 70 g | 70 g | 60 g | 60 g | 60 g |
| Gomme xanthane à 2 % dans l'eau | 50 g | 50 g | 40 g | 40 g | 40 g |
| Antimousse | 1 g | 1 g | 1 g | 1 g | 1 g |
| Eau (quantité suffisante pour 1000 cm3) | 316 g | 336 g | 321 g | 320 g | 319 g |
| Diamètre moyen des particules (en micromètres) | 3,5 | 3,6 | 3,8 | 3,7 | 3,5 |
| CF n° 4 | 30 s | 35 s | 40 s | 40 s | 38 s |

TABLEAU 5

Exemples 21 et 22

Préparation de suspensions aqueuses de diuron.

En suivant le mode opératoire décrit précédemment, on prépare deux suspensions aqueuses selon l'invention de diuron dont les compositions respectives sont indiquées dans le tableau 6 ci-après (avec les

mêmes abréviations que pour le tableau 1).

De même que pour les suspensions des exemples 1 à 4, toutes les suspensions des exemples 21 et 22 ont été stables :

- plus de 2 mois à 45 °C et
- plus de 2 mois en cycle de températures : 24 heures à + 45 °C, 24 heures à - 5 °C.

Par dilution à l'eau, elles ont conduit à des suspensions de 0,5 % à 2 % de matière active, sans floculation ni sédimentation pendant une durée d'utilisation d'environ 24 heures.

| Constituants de la suspension | Exemple 21 | Exemple 22 |
|---|---|---|
| Diuron | 430 g | 450 g |
| Sucroglycérides d'huile de coprah à 10 % dans l'eau | 120 g | 0 g |
| Sucroglycérides d'huile de beurre à 10 % dans l'eau | 0 g | 100 g |
| Huile de ricin éthoxylée (environ 33 OE) | 5 g | 10 g |
| Huile de ricin éthoxylée (environ 18 OE) | 5 g | 0 g |
| Dodécylbenzène sulfonate de sodium | 5 g | 5 g |
| Monopropylène-glycol | 70 g | 70 g |
| Gomme xanthane à 2 % dans l'eau | 60 g | 60 g |
| Antimousse | 1 g | 1 g |
| Eau (quantité suffisante pour 1000 cm3) | 447 g | 455 g |
| Diamètre moyen des particules (en micromètres) | 3,2 | 3,5 |
| CF n° 4 | 10 s | 12 s |

TABLEAU 6

Exemples 23 et 24

Préparation de suspensions aqueuses de triflumizole.

Le triflumizole est un fongicide connu, ayant un point de fusion de 63 °C et une solubilité dans l'eau à 25 °C de 0,012 g/l :

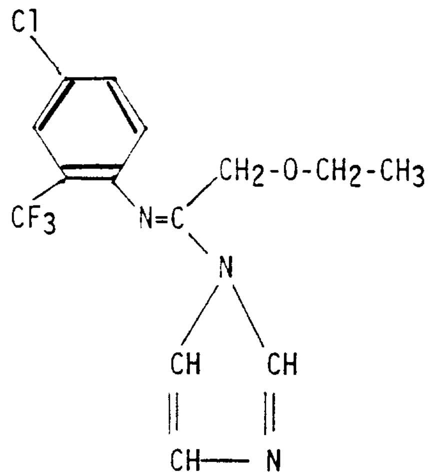

En suivant le mode opératoire décrit précédemment, on prépare deux suspensions aqueuses selon l'invention de triflumizole dont les compositions respectives sont indiquées dans le tableau 7 ci-après (avec les mêmes abréviations que pour le tableau 1).

De même que pour les suspensions des exemples 1 à 4, toutes les suspensions des exemples 23 et 24 ont été stables :

- plus de 2 mois à une température inférieure à 35 °C (température limite de stabilité de la matière active).

Par dilution à l'eau, elles ont conduit à des suspensions de 0,5 % à 2 % de matière active, sans floculation ni sédimentation pendant une durée d'utilisation d'environ 24 heures.

| Constituants de la suspension | Exemple 23 | Exemple 24 |
|---|---|---|
| Triflumizole | 430 g | 500 g |
| Sucroglycérides de suif à 10 % dans l'eau | 130 g | 0 g |
| Sucroglycérides d'huile de ricin à 10 % dans l'eau | 0 g | 200 g |
| Huile de ricin éthoxylée (environ 33 OE) | 8 g | 20 g |
| Dodécylbenzène sulfonate de sodium | 3 g | 0 g |
| Lauryl sulfate de sodium | 0 g | 3 g |
| Monopropylène-glycol | 60 g | 70 g |
| Gomme xanthane à 2 % dans l'eau | 50 g | 50 g |
| Antimousse | 1 g | 1 g |
| Eau (quantité suffisante pour 1000 cm3) | 374 g | 220 g |
| Diamètre moyen des particules (en micromètres) | 4,2 | 4,5 |
| CF n° 4 | 39 s | 46 s |

TABLEAU 7

## Revendications

**Revendications pour les Etats contractants suivants : DE, GB, FR, IT, NL, SE, LI, CH, BE, AT, LU, DK**

1. Suspension aqueuse concentrée de matière active phytosanitaire solide, de point de fusion supérieur ou égal à 45 °C et de solubilité dans l'eau à 20 °C inférieure à 5g/l caractérisée en ce qu'elle comporte en outre au moins:
   - des sucroglycérides et
   - un triglycéride alcoxylé et/ou un acide gras alcoxylé et/ou un ester de sorbitan et/ou un ester de sorbitan alcoxylé,

2. Suspension selon la revendication 1, caractérisée en ce qu'elle comporte en outre un agent mouillant choisi parmi les sels anioniques de tensio-actifs, les alcools alcoxylés, les phénols substitués ou non alcoxylés, les tensio-actifs à base de silicone et les tensio-actifs fluorés.

3. Suspension selon l'une des revendications 1 ou 2, caractérisée en ce que les sucroglycérides sont préparés par transestérification de triglycérides, de préférence naturels, par le saccharose.

4. Suspension selon la revendication 3, caractérisée en ce que les triglycérides naturels sont choisis parmi le saindoux, le suif, l'huile d'arachide, l'huile de beurre, l'huile de graine de coton, l'huile de lin, l'huile d'olive, l'huile de palme, l'huile de pépins de raisin, l'huile de poisson, l'huile de soja, l'huile de ricin, l'huile de colza, l'huile de coprah, l'huile de noix de coco.

5. Suspension selon l'une des revendications 1 à 4, caractérisée en ce que les sucroglycérides utilisés proviennent de l'huile de palme, du saindoux, de l'huile de coprah, du suif, de l'huile de colza, l'huile de ricin.

6. Suspension selon l'une des revendications 1 à 5, caractérisée en ce qu'elle comprend également un phospholipide.

7. Suspension selon la revendication 6, caractérisée en ce que le phospholipide utilisé est choisi parmi les lécithines brutes d'origine végétale ou animale, telles que la lécithine de soja, la lécithine du jaune d'oeuf ainsi que toute fraction de lécithine.

8. Suspension selon l'une des revendications 1 à 7, caractérisée en ce qu'elle comprend de 0,1 % à 5 % en poids de sucroglycérides, ou le cas échéant de sucroglycérides et de phospholipide, par rapport au volume total de la suspension, et de préférence de 0,2 % à 4 % en poids/volume.

9. Suspension selon l'une des revendications 6 à 8, caractérisée en ce que le rapport pondéral sucroglycérides/phospholipide est de 3/1 à 1/3.

10. Suspension selon l'une des revendications 1 à 9, caractérisée en ce que la matière active phytosanitaire est choisie parmi :
    - la deltaméthrine,
    - le propham,
    - la tétraméthrine,
    - le furalaxyl,
    - l'heptachlor,
    - le propanil,
    - l'oxadiazon,
    - le triflumizole,
    - la diméthaméthrine,
    - l'atrazine,
    - le diuron,
    - le néburon,
    - le linuron,
    - l'isoproturon,
    - la simazine,
    - l'améthryne,
    - le phenmdipham,
    - le pendiméthalin.

11. Suspension selon l'une des revendications 1 à 10, caractérisée en ce qu'elle comporte de 30 % à 90 % en poids de matière active, par rapport au volume total de la suspension et de préférence de 40 % à 85 % en poids/volume.

12. Suspension selon l'une des revendications 1 à 11, caractérisée en ce qu'elle comporte un triglycéride éthoxylé et/ou un acide gras éthoxylé et/ou un ester de sorbitan et/ou un ester de sorbitan éthoxylé.

13. Suspension selon l'une des revendications 1 à 12, caractérisée en ce qu'elle comporte de 0,1 % à 3 % en poids de triglycérides alcoxylés et/ou d'acides gras alcoxylés et/ou d'esters de sorbitan et/ou d'esters de sorbitan alcoxylés par volume de la suspension et de préférence de 0,2 % à 2,8 % en poids/volume.

**14.** Suspension selon l'une des revendications 1 à 13, caractérisée en ce qu'elle comporte au moins un agent mouillant choisi parmi les sels anioniques de tensio-actifs, les alcools alcoxylés et les alkylphénols alcoxylés représentés par les formules suivantes :

$R_1$-$SO_3$-M
$R_2$-$SO_4$-M
$R_3$-$(OE)_n$-H
$R_3$-$(OP)_n$-H
$R_3$-$(OE\text{-}OP)_n$-H
$R_4$-COONa

dans lesquelles :

- $R_1$ représente
  . un radical alkylphényle (tel que dodécylphényle),
  . un radical alkyle (tel que dodécyle),
  . un radical bis(octyloxycarbonyl)-1,2 éthyle, (de préférence bis(éthyl-2 hexyloxycarbonyl)-1,2 éthyle,
- $R_2$ représente
  . un radical alkyle (tel que dodécyle),
  . un radical alkylphénol éthoxylé (tel que nonylphénol éthoxylé avec 2 à 50 motifs OE),
  . un radical alkyle éthoxylé,
- $R_3$ représente
  . un radical alkylaryle (tel que nonylphényle, alkylnaphtyle),
  . un radical alkyle ayant 8 à 20 atomes de carbone, et de préférence de 10 à 14 atomes de carbone,
- n est un nombre de 4 à 12,
- $R_4$ représente un radical alkyle ayant 10 à 22 atomes de carbone,
- M représente Na, K, $NH_4$ ou un cation triéthanolammonium.

**15.** Suspension selon l'une des revendications 1 à 13, caractérisée en ce qu'elle comporte au moins un agent mouillant choisi parmi les tensio-actifs à base de silicone tels que les copolymères de polydiméthylsiloxane et soit d'homopolymère d'éthylène-glycol, soit de copolymère d'éthylène-glycol et de propylène-glycol, ou les tensio-actifs fluorés tels que des composés comportant une chaîne linéaire perfluorocarbonée, hydrophobe et oléophobe, et une partie hydrophile comportant par exemple un groupement sulfonique, acide ou neutralisé, un groupement carboxylique, un reste alcool éthoxylé.

**16.** Suspension selon l'une des revendications 1 à 15, caractérisée en ce qu'elle comprend de 0,05 % à 1 % en poids d'agent mouillant par rapport au volume total de la suspension, et de préférence de 0,1 % à 0,8 % en poids/volume.

**Revendications pour l'Etat contractant suivant : ES**

**1.** Procédé de traitement des plantes, caractérisé en ce que l'on utilise, généralement après dilution par l'eau, une suspension aqueuse concentrée de matière active phytosanitaire solide,
de point de fusion supérieur ou égal à 45°C et de solubilité dans l'eau à 20°C inférieure à 5g/l, comportant en outre au moins:
- des sucroglycérides et
- un triglycéride alcoxylé et/ou un acide gras alcoxylé et/ou un ester de sorbitan et/ou un ester de sorbitan alcoxylé.

**2.** Procédé selon la revendication 1, caractérisé en ce la suspension comporte en outre un agent mouillant choisi parmi les sels anioniques de tensio-actifs, les alcools alcoxylés, les phénols substitués ou non alcoxylés, les tensio-actifs à base de silicone et les tensio-actifs fluorés.

**3.** Procédé selon l'une des revendications 1 ou 2, caractérisé en ce que les sucroglycérides sont préparés par transestérification de triglycérides, de préférence naturels, par le saccharose.

**4.** Procédé selon la revendication 3, caractérisé en ce que les triglycérides naturels sont choisis parmi le saindoux, le suif, l'huile d'arachide, l'huile de beurre, l'huile de graine de coton, l'huile de lin, l'huile d'olive, l'huile de palme, l'huile de pépins de raisin, l'huile de poisson, l'huile de soja, l'huile de ricin,

l'huile de colza, l'huile de coprah, l'huile de noix de coco.

**5.** Procédé selon l'une des revendications 1 à 4, caractérisé en ce que les sucroglycérides utilisés proviennent de l'huile de palme, du saindoux, de l'huile de coprah, du suif, de l'huile de colza, l'huile de ricin.

**6.** Procédé selon l'une des revendications 1 à 5, caractérisé en ce que la suspension comprend également un phospholipide.

**7.** Procédé selon la revendication 6, caractérisé en ce que le phospholipide utilisé est choisi parmi les lécithines brutes d'origine végétale ou animale, telles que la lécithine de soja, la lécithine du jaune d'oeuf ainsi que toute fraction de lécithine.

**8.** Procédé selon l'une des revendications 1 à 7, caractérisé en ce que la suspension comprend de 0,1 % à 5 % en poids de sucroglycérides, ou le cas échéant de sucroglycérides et de phospholipide, par rapport au volume total de la suspension, et de préférence de 0,2 % à 4 % en poids/volume.

**9.** Procédé selon l'une des revendications 6 à 8, caractérisé en ce que le rapport pondéral sucroglycérides/phospholipide dans la suspension est de 3/1 à 1/3.

**10.** Procédé selon l'une des revendications 1 à 9, caractérisé en ce que la matière active phytosanitaire est choisie parmi :

- la deltaméthrine,
- le propham,
- la tétraméthrine,
- le furalaxyl,
- l'heptachlor,
- le propanil,
- l'oxadiazon,
- le triflumizole,
- la diméthaméthrine,
- l'atrazine,
- le diuron,
- le néburon,
- le linuron,
- l'isoproturon,
- la simazine,
- l'améthryne,
- le phenmdipham,
- le pendiméthalin.

**11.** Procédé selon l'une des revendications 1 à 10, caractérisé en ce que la suspension comporte de 30 % à 90 % en poids de matière active, par rapport au volume total de la suspension et de préférence de 40 % à 85 % en poids/volume.

**12.** Procédé selon l'une des revendications 1 à 11, caractérisé en ce que la suspension comporte un triglycéride éthoxylé et/ou un acide gras éthoxylé et/ou un ester de sorbitan et/ou un ester de sorbitan éthoxylé.

**13.** Procédé selon l'une des revendications 1 à 12, caractérisé en ce que la suspension comporte de 0,1 % à 3 % en poids de triglycérides alcoxylés et/ou d'acides gras alcoxylés et/ou d'esters de sorbitan et/ou d'esters de sorbitan alcoxylés par volume de la suspension et de préférence de 0,2 % à 2,8 % en poids/volume.

**14.** Procédé selon l'une des revendications 1 à 13, caractérisé en ce que la suspension comporte au moins un agent mouillant choisi parmi les sels anioniques de tensio-actifs, les alcools alcoxylés et les alkylphénols alcoxylés représentés par les formules suivantes :

$R_1$-$SO_3$-M
$R_2$-$SO_4$-M
$R_3$-$(OE)_n$-H
$R_3$-$(OP)_n$-H
$R_3$-$(OE\text{-}OP)_n$-H
$R_4$-COONa

dans lesquelles :

- $R_1$ représente
  . un radical alkylphényle (tel que dodécylphényle),
  . un radical alkyle (tel que dodécyle),
  . un radical bis(octyloxycarbonyl)-1,2 éthyle, (de préférence bis(éthyl-2 hexyloxycarbonyl)-1,2 éthyle,
- $R_2$ représente
  . un radical alkyle (tel que dodécyle),
  . un radical alkylphénol éthoxylé (tel que nonylphénol éthoxylé avec 2 à 50 motifs OE),
  . un radical alkyle éthoxylé,
- $R_3$ représente
  . un radical alkylaryle (tel que nonylphényle, alkylnaphtyle),
  . un radical alkyle ayant 8 à 20 atomes de carbone, et de préférence de 10 à 14 atomes de carbone,
- n est un nombre de 4 à 12,
- $R_4$ représente un radical alkyle ayant 10 à 22 atomes de carbone,
- M représente Na, K, $NH_4$ ou un cation triéthanolammonium.

**15.** Procédé selon l'une des revendications 1 à 13, caractérisé en ce que la suspension comporte au moins un agent mouillant choisi parmi les tensio-actifs à base de silicone tels que les copolymères de polydiméthylsiloxane et soit d'homopolymère d'éthylène-glycol, soit de copolymère d'éthylène-glycol et de propylène-glycol, ou les tensio-actifs fluorés tels que des composés comportant une chaîne linéaire perfluorocarbonée, hydrophobe et oléophobe, et une partie hydrophile comportant par exemple un groupement sulfonique, acide ou neutralisé, un groupement carboxylique, un reste alcool éthoxylé.

**16.** Procédé selon l'une des revendications 1 à 15, caractérisé en ce que la suspension comprend de 0,05 % à 1 % en poids d'agent mouillant par rapport au volume total de la suspension, et de préférence de 0,1 % à 0,8 % en poids/volume.

## Claims

**Claims for the following Contracting States : DE, GB, FR, IT, NL, SE, LI, CH, BE, AT, LU, DK**

**1.** Concentrated aqueous suspension of solid plant-protection active substance, with a melting point greater than or equal to 45 °C, and with a solubility in water at 20 °C less than 5 g/l, characterised in that it further contains at least:
- sucroglycerides and
- an alkoxylated triglyceride and/or an alkoxylated fatty acid and/or a sorbitan ester and/or an alkoxylated sorbitan ester.

**2.** Suspension according to claim 1, characterised in that it further contains a wetting agent chosen from among anionic salts of surface-active agents, alkoxylated alcohols, substituted or non-alkoxylated phenols, silicone-based surface-active agents and fluorinated surface-active agents.

**3.** Suspension according to one of claims 1 and 2, characterised in that the sucroglycerides are prepared by transesterification of triglycerides, preferably natural, with sucrose.

**4.** Suspension according to claim 3, characterised in that the natural triglycerides are chosen from among lard, tallow, groundnut oil, butter oil, cottonseed oil, linseed oil, olive oil, palm oil, grape-seed oil, fish oil, soya-bean oil, castor oil, rapeseed oil, copra oil, coconut oil.

**5.** Suspension according to one of claims 1 to 4, characterised in that the sucroglycerides used are obtained from palm oil, lard, copra oil, tallow, rapeseed oil, castor oil.

6. Suspension according to one of claims 1 to 5, characterised in that it also contains a phospholipid.

7. Suspension according to claim 6, characterised in that the phospholipid used is chosen from among crude lecithins of plant or animal origin, such as soya-bean lecithin, egg-yolk lecithin as well as any lecithin fraction.

8. Suspension according to one of claims 1 to 7, characterised in that it comprises from 0.1 % to 5 % by weight of sucroglycerides, or optionally sucroglycerides and phospholipid, relative to the total volume of the suspension, and preferably from 0.2 % to 4 % by weight/volume.

9. Suspension according to one of claims 6 to 8, characterised in that the weight ratio of sucroglycerides/phospholipid is 3:1 to 1:3.

10. Suspension according to one of claims 1 to 9, characterised in that the active plant-protection substance is chosen from among:
- deltamethrin,
- propham,
- tetramethrin
- furalaxyl,
- heptachlor,
- propanil,
- oxadiazon,
- triflumizole,
- dimethametryn,
- atrazine,
- diuron,
- neburon,
- linuron,
- isoproturon,
- simazine,
- ametryne,
- phenmedipham,
- pendimethalin.

11. Suspension according to one of claims 1 to 10, characterised in that it contains from 30 % to 90 % by weight of active substance, relative to the total volume of the suspension and preferably from 40 % to 85 % by weight/volume.

12. Suspension according to one of claims 1 to 11, characterised in that it contains an ethoxylated triglyceride and/or an ethoxylated fatty acid and/or a sorbitan ester and/or an ethoxylated sorbitan ester.

13. Suspension according to one of claims 1 to 12, characterised in that it contains from 0.1 % to 3 % by weight of alkoxylated triglycerides and/or alkoxylated fatty acids and/or sorbitan esters and/or alkoxylated sorbitan esters per volume of the suspension and preferably from 0.2 % to 2.8 % by weight/volume.

14. Suspension according to one of claims 1 to 13, characterised in that it contains at least one wetting agent chosen from among anionic salts of surface-active agents, alkoxylated alcohols and alkoxylated alkylphenols which are represented by the following formulae:

$R_1$-$SO_3$-M
$R_2$-$SO_4$-M
$R_3$-$(EO)_n$-H
$R_3$-$(PO)_n$-H
$R_3$-$(EO\text{-}PO)_n$-H
$R_4$-COONa

in which:

- $R_1$ represents
  . an alkylphenyl radical (such as dodecylphenyl),
  . an alkyl radical (such as dodecyl),
  . a 1,2-bis(octyloxycarbonyl)ethyl radical, (preferably 1,2-bis(2-ethylhexyloxycarbonyl)ethyl),
- $R_2$ represents
  . an alkyl radical (such as dodecyl),
  . an ethoxylated alkylphenol radical (such as ethoxylated nonylphenol with 2 to 50 EO units),
  . an ethoxylated alkyl radical,
- $R_3$ represents
  . an alkylaryl radical (such as nonylphenyl, alkylnaphthyl),
  . an alkyl radical having 8 to 20 carbon atoms, and preferably from 10 to 14 carbon atoms,
- n is a number from 4 to 12,
- $R_4$ represents an alkyl radical having 10 to 22 carbon atoms,
- M represents Na, K, $NH_4$ or a triethanolammonium cation.

**15.** Suspension according to one of claims 1 to 13, characterised in that it contains at least one wetting agent chosen from among silicone-based surface-active agents such as copolymers of polydimethylsiloxane and either of a homopolymer of ethylene glycol, or of a copolymer of ethylene glycol and propylene glycol, or fluorinated surface-active agents such as compounds containing a linear perfluorocarbon chain, hydrophobic and oleophobic, and a hydrophilic region containing for example a sulphonic group, acidic or neutralised, a carboxylic group or an ethoxylated alcohol residue.

**16.** Suspension according to one of claims 1 to 15, characterised in that it contains from 0.05 % to 1 % by weight of wetting agent relative to the total volume of the suspension, and preferably from 0.1 % to 0.8 % by weight/volume.

**Claims for the following Contracting State : ES**

**1.** Process for treating plants, characterised in that, generally after dilution with water, use is made of a concentrated aqueous suspension of solid plant-protection active substance, with a melting point greater than or equal to 45 °C, and with a solubility in water at 20 °C less than 5 g/l, futher containing at least:
- sucroglycerides and,
- an alkoxylated triglyceride and/or an alkoxylated fatty acid and/or a sorbitan ester and/or an alkoxylated sorbitan ester.

**2.** Process according to Claim 1, characterised in that the suspension further contains a wetting agent chosen from among anionic salts of surface-active agents, alkoxylated alcohols, substituted or non-alkoxylated phenols, silicone-based surface-active agents and fluorinated surface-active agents,
- and water.

**3.** Process according to one of claims 1 and 2, characterised in that the sucroglycerides are prepared by transesterification of triglycerides, preferably natural, with sucrose.

**4.** Process according to claim 3, characterised in that the natural triglycerides are chosen from among lard, tallow, groundnut oil, butter oil, cottonseed oil, linseed oil, olive oil, palm oil, grape-seed oil, fish oil, soya-bean oil, castor oil, rapeseed oil, copra oil, coconut oil.

**5.** Process according to one of claims 1 to 4, characterised in that the sucroglycerides used are obtained from palm oil, lard, copra oil, tallow, rapeseed oil, castor oil.

**6.** Process according to one of claims 1 to 5, characterised in that the suspension also contains a phospholipid.

**7.** Process according to claim 6, characterised in that the phospholipid used is chosen from among crude lecithins of plant or animal origin, such as soya-bean lecithin, egg-yolk lecithin as well as any lecithin fraction.

**8.** Process according to one of claims 1 to 7, characterised in that the suspension comprises from 0.1 % to 5 % by weight of sucroglycerides, or optionally sucroglycerides and phospholipid, relative to the total volume of the suspension, and preferably from 0.2 % to 4 % by weight/volume.

**9.** Process according to one of claims 6 to 8, characterised in that the weight ratio of sucroglycerides/phospholipid in the suspension is 3:1 to 1:3.

**10.** Process according to one of claims 1 to 9, characterised in that the active plant-protection substance is chosen from among:

- deltamethrin,
- propham,
- tetramethrin
- furalaxyl,
- heptachlor,
- propanil,
- oxadiazon,
- triflumizole,
- dimethametryn,
- atrazine,
- diuron,
- neburon,
- linuron,
- isoproturon,
- simazine,
- ametryne,
- phenmedipham,
- pendimethalin.

**11.** Process according to one of claims 1 to 10, characterised in that the suspension contains from 30 % to 90 % by weight of active substance, relative to the total volume of the suspension and preferably from 40 % to 85 % by weight/volume.

**12.** Process according to one of claims 1 to 11, characterised in that the suspension contains an ethoxylated triglyceride and/or an ethoxylated fatty acid and/or a sorbitan ester and/or an ethoxylated sorbitan ester.

**13.** Process according to one of claims 1 to 12, characterised in that the suspension contains from 0.1 % to 3 % by weight of alkoxylated triglycerides and/or alkoxylated fatty acids and/or sorbitan esters and/or alkoxylated sorbitan esters per volume of the suspension and preferably from 0.2 % to 2.8 % by weight/volume.

**14.** Process according to one of claims 1 to 13, characterised in that the suspension contains at least one wetting agent chosen from among anionic salts of surface-active agents, alkoxylated alcohols and alkoxylated alkylphenols which are represented by the following formulae:

$R_1$-$SO_3$-M
$R_2$-$SO_4$-M
$R_3$-$(EO)_n$-H
$R_3$-$(PO)_n$-H
$R_3$-$(EO\text{-}PO)_n$-H
$R_4$-COONa

in which:

- $R_1$ represents . an alkylphenyl radical (such as dodecylphenyl),
  . an alkyl radical (such as dodecyl),
  . a 1,2-bis(octyloxycarbonyl)ethyl radical, (preferably 1,2-bis(2-ethylhexyloxycarbonyl)ethyl),
- $R_2$ represents . an alkyl radical (such as dodecyl),

- $R_3$ represents
  . an ethoxylated alkylphenol radical (such as ethoxylated nonylphenol with 2 to 50 EO units),
  . an ethoxylated alkyl radical,
  . an alkylaryl radical (such as nonylphenyl, alkylnaphthyl),
  . an alkyl radical having 8 to 20 carbon atoms, and preferably from 10 to 14 carbon atoms,
- n is a number from 4 to 12,
- $R_4$ represents an alkyl radical having 10 to 22 carbon atoms,
- M represents Na, K, $NH_4$ or a triethanolammonium cation.

**15.** Process according to one of claims 1 to 13, characterised in that the suspension contains at least one wetting agent chosen from among silicone-based surface-active agents such as copolymers of polydimethylsiloxane and either of a homopolymer of ethylene glycol, or of a copolymer of ethylene glycol and propylene glycol, or fluorinated surface-active agents such as compounds containing a linear perfluorocarbon chain, hydrophobic and oleophobic, and a hydrophilic region containing for example a sulphonic group, acidic or neutralised, a carboxylic group or an ethoxylated alcohol residue.

**16.** Process according to one of claims 1 to 15, characterised in that the suspension contains from 0.05 % to 1 % by weight of wetting agent relative to the total volume of the suspension, and preferably from 0.1 % to 0.8 % by weight/volume.

**Patentansprüche**

**Patentansprüche für folgende Vertragsstaaten : DE, GB, FR, IT, NL, SE, LI, CH, BE, AT, LU, DK**

**1.** Wäßrige konzentrierte Suspension von festem, pflanzenschutzlich wirksamem Material mit einem Schmelzpunkt oberhalb von oder gleich 45 ° C und mit einer Löslichkeit in Wasser bei 20 ° C unterhalb von 5 g/l, dadurch gekennzeichnet, daß sie darüberhinaus mindestens
- Sucroglyceride und
- ein alkoxyliertes Triglycerid und/oder eine alkoxylierte Fettsäure und/oder einen Sorbitanester und/oder einen alkoxylierten Sorbitanester

enthält.

**2.** Suspension nach Anspruch 1, dadurch gekennzeichnet, daß sie darüberhinaus ein Netzmittel enthält, das aus anionischen Salzen von Tensiden, alkoxylierten Alkoholen, substituierten oder unsubstituierten alkoxylierten Phenolen, Tensiden auf Silicon-Basis und fluorierten Tensiden ausgewählt ist.

**3.** Suspension nach einem der Ansprüche 1 oder 2, dadurch gekennzeichnet, daß die Sucroglyceride durch Umesterung von vorzugsweise natürlichen Triglyceriden mit Saccharose hergestellt sind.

**4.** Suspension nach Anspruch 3, dadurch gekennzeichnet, daß die natürlichen Triglyceride aus Schweineschmalz, Talg, Erdnußöl, Butteröl, Baumwollsamenöl, Leinöl, Olivenöl, Palmöl, Traubenkernöl, Fischöl, Sojaöl, Rizinusöl, Rapsöl, Kopraöl, Kokosnußöl ausgewählt sind.

**5.** Suspension nach einem der Ansprüche 1 bis 4, dadurch gekennzeichnet, daß die verwendeten Sucroglyceride von Palmöl, Schweineschmalz, Kopraöl, Talg, Rapsöl, Rizinusöl abgeleitet sind.

**6.** Suspension nach einem der Ansprüche 1 bis 5, dadurch gekennzeichnet, daß sie auch ein Phospholipid enthält.

**7.** Suspension nach Anspruch 6, dadurch gekennzeichnet, daß das verwendete Phospholipid aus den Rohlecithinen pflanzlichen oder tierischen Ursprungs, wie Sojalecithin, Eigelb-Lecithin, sowie jeder Lecithinfraktion ausgewählt ist.

**8.** Suspension nach einem der Ansprüche 1 bis 7, dadurch gekennzeichnet, daß sie 0,1 bis 5 Gew.-%, bezogen auf das Gesamtvolumen der Suspension, und vorzugsweise 0,2 bis 4 Gew./Vol.-% Sucroglyceride oder gegebenenfalls Sucroglyceride und Phospholipid enthält.

**9.** Suspension nach einem der Ansprüche 6 bis 8, dadurch gekennzeichnet, daß das Gewichtsverhältnis Sucroglyceride/Phospholipid 3/1 bis 1/3 beträgt.

**10.** Suspension nach einem der Ansprüche 1 bis 9, dadurch gekennzeichnet, daß das pflanzenschutzlich wirksame Material ausgewählt ist aus:
- Deltamethrin
- Propham
- Tetramethrin
- Furalaxyl
- Heptachlor
- Propanil
- Oxadiazon
- Triflumizol
- Dimethamethrin
- Atrazin
- Diuron
- Neburon
- Linuron
- Isoproturon
- Simazin
- Amethryn
- Phenmedipham
- Pendimethalin.

**11.** Suspension nach einem der Ansprüche 1 bis 10, dadurch gekennzeichnet, daß sie 30 bis 90 Gew.-%, bezogen auf das Gesamtvolumen der Suspension, und vorzugsweise 40 bis 85 Gew./Vol.-% wirksames Material enthält.

**12.** Suspension nach einem der Ansprüche 1 bis 11, dadurch gekennzeichnet, daß sie ein ethoxyliertes Triglycerid und/oder eine ethoxylierte Fettsäure und/oder einen Sorbitanester und/oder einen ethoxylierten Sorbitanester enthält.

**13.** Suspension nach einem der Ansprüche 1 bis 12, dadurch gekennzeichnet, daß sie 0,1 bis 3 Gew.-% pro Volumen der Suspension und vorzugsweise 0,2 bis 2,8 Gew./Vol.-% alkoxylierte Triglyceride und/oder alkoxylierte Fettsäuren und/oder Sorbitanester und/oder alkoxylierte Sorbitanester enthält.

**14.** Suspension nach einem der Ansprüche 1 bis 13, dadurch gekennzeichnet, daß sie mindestens ein Netzmittel enthält, das aus den anionischen Salzen von Tensiden, alkoxylierten Alkoholen und alkoxylierten Alkylphenolen ausgewählt ist, die durch die folgenden Formeln dargestellt werden:

$R_1$-$SO_3$-M
$R_2$-$SO_4$-M
$R_3$-$(OE)_n$-H
$R_3$-$(OP)_n$-H
$R_3$-$(OE\text{-}OP)_n$-H
$R_4$-COONa

in denen:
- $R_1$ . einen Alkylphenylrest (wie Dodecylphenyl)
  . einen Alkylrest (wie Dodecyl) . einen 1,2-Bis(octyloxycarbonyl)ethylrest, vorzugsweise 1,2-Bis(2-ethylhexyloxycarbonyl)ethyl darstellt,
- $R_2$ . einen Alkylrest (wie Dodecyl),
  . einen ethoxylierten Alkylphenolrest (wie ethoxyliertes Nonylphenol mit 2 bis 50 Einheiten OE),
  . einen ethoxylierten Alkylrest darstellt,
- $R_3$ . einen Alkylarylrest (wie Nonylphenyl, Alkylnaphthyl),
  . einen Alkylrest mit 8 bis 20 Kohlenstoffatomen und vorzugsweise 10 bis 14 Kohlenstoffatomen darstellt,

- n eine Zahl von 4 bis 12 ist,
- $R_4$ einen Alkylrest mit 10 bis 22 Kohlenstoffatomen darstellt,
- M Na, K, $NH_4$ oder ein Triethanolammoniumkation darstellt.

**15.** Suspension nach einem der Ansprüche 1 bis 13, dadurch gekennzeichnet, daß sie mindestens ein Netzmittel enthält, das ausgewählt ist aus Tensiden auf Silicon-Basis, wie den Copolymeren von Polydimethylsiloxan und entweder Ethylenglykol-Homopolymer oder Ethylenglykol- und Propylenglykol-Copolymer, oder aus fluorierten Tensiden, wie den Verbindungen, die eine hydrophobe und oleophobe lineare perfluorierte Kohlenstoffkette und einen hydrophilen Teil umfassen, der beispielsweise eine saure oder neutralisierte Sulfonsäuregruppe, eine Carboxylgruppe, einen ethoxylierten Alkoholrest umfaßt.

**16.** Suspension nach einem der Ansprüche 1 bis 15, dadurch gekennzeichnet, daß sie 0,05 bis 1 Gew.-%, bezogen auf das Gesamtvolumen der Suspension, und vorzugsweise 0,1 bis 0,8 Gew./Vol.-% Netzmittel enthält.

**Patentansprüche für folgenden Vertragsstaat : ES**

**1.** Verfahren zur Behandlung von Pflanzen, dadurch gekennzeichnet, daß man, im allgemeinen nach Verdünnung mit Wasser, eine wäßrige konzentrierte Suspension von festem, pflanzenschutzlich wirksamem Material mit einem Schmelzpunkt oberhalb von oder gleich 45 °C und mit einer Löslichkeit in Wasser bei 20 °C unterhalb von 5 g/l verwendet, die darüberhinaus mindestens
- Sucroglyceride und
- ein alkoxyliertes Triglycerid und/oder eine alkoxylierte Fettsäure und/oder einen Sorbitanester und/oder einen alkoxylierten Sorbitanester

enthält.

**2.** Verfahren nach Anspruch 1, dadurch gekennzeichnet, daß die Suspension darüberhinaus ein Netzmittel enthält, das aus anionischen Salzen von Tensiden, alkoxylierten Alkoholen, substituierten oder unsubstituierten alkoxylierten Phenolen, Tensiden auf Silicon-Basis und den fluorierten Tensiden ausgewählt ist.

**3.** Verfahren nach einem der Ansprüche 1 oder 2, dadurch gekennzeichnet, daß die Sucroglyceride durch Umesterung von vorzugsweise natürlichen Triglyceriden mit Saccharose hergestellt sind.

**4.** Verfahren nach Anspruch 3, dadurch gekennzeichnet, daß die natürlichen Triglyceride aus Schweineschmalz, Talg, Erdnußöl, Butteröl, Baumwollsamenöl, Leinöl, Olivenöl, Palmöl, Traubenkernöl, Fischöl, Sojaöl, Rizinusöl, Rapsöl, Kopraöl, Kokosnußöl ausgewählt sind.

**5.** Verfahren nach einem der Ansprüche 1 bis 4, dadurch gekennzeichnet, daß die verwendeten Sucroglyceride von Palmöl, Schweineschmalz, Kopraöl, Talg, Rapsöl, Rizinusöl abgeleitet sind.

**6.** Verfahren nach einem der Ansprüche 1 bis 5, dadurch gekennzeichnet, daß die Suspension auch ein Phospholipid enthält.

**7.** Verfahren nach Anspruch 6, dadurch gekennzeichnet, daß das verwendete Phospholipid aus den Rohlecithinen pflanzlichen oder tierischen Ursprungs, wie Sojalecithin, Eigelb-Lecithin, sowie jeder Lecithinfraktion ausgewählt ist.

**8.** Verfahren nach einem der Ansprüche 1 bis 7, dadurch gekennzeichnet, daß die Suspension 0,1 bis 5 Gew.-%, bezogen auf das Gesamtvolumen der Suspension, und vorzugsweise 0,2 bis 4 Gew./Vol.-% Sucroglyceride oder gegebenenfalls Sucroglyceride und Phospholipid enthält.

**9.** Verfahren nach einem der Ansprüche 6 bis 8, dadurch gekennzeichnet, daß das Gewichtsverhältnis Sucroglyceride/Phospholipid in der Suspension 3/1 bis 1/3 beträgt.

**10.** Verfahren nach einem der Ansprüche 1 bis 9, dadurch gekennzeichnet, daß das pflanzenschutzlich wirksame Material ausgewählt ist aus:
- Deltamethrin

- Propham
- Tetramethrin
- Furalaxyl
- Heptachlor
- Propanil
- Oxadiazon
- Triflumizol
- Dimethamethrin
- Atrazin
- Diuron
- Neburon
- Linuron
- Isoproturon
- Simazin
- Amethryn
- Phenmedipham
- Pendimethalin.

**11.** Verfahren nach einem der Ansprüche 1 bis 10, dadurch gekennzeichnet, daß die Suspension 30 bis 90 Gew.-%, bezogen auf das Gesamtvolumen der Suspension, und vorzugsweise 40 bis 85 Gew./Vol.-% wirksames Material enthält.

**12.** Verfahren nach einem der Ansprüche 1 bis 11, dadurch gekennzeichnet, daß die Suspension ein ethoxyliertes Triglycerid und/oder eine ethoxylierte Fettsäure und/oder einen Sorbitanester und/oder einen ethoxylierten Sorbitanester enthält.

**13.** Verfahren nach einem der Ansprüche 1 bis 12, dadurch gekennzeichnet, daß die Suspension 0,1 bis 3 Gew.-% pro Volumen der Suspension und vorzugsweise 0,2 bis 2,8 Gew./Vol.-% alkoxylierte Triglyceride und/oder alkoxylierte Fettsäuren und/oder Sorbitanester und/oder alkoxylierte Sorbitanester enthält.

**14.** Verfahren nach einem der Ansprüche 1 bis 13, dadurch gekennzeichnet, daß die Suspension mindestens ein Netzmittel enthält, das aus den anionischen Salzen von Tensiden, alkoxylierten Alkoholen und alkoxylierten Alkylphenolen ausgewählt ist, die durch die folgenden Formeln dargestellt werden:

$R_1$-$SO_3$-M
$R_2$-$SO_4$-M
$R_3$-$(OE)_n$-H
$R_3$-$(OP)_n$-H
$R_3$-$(OE\text{-}OP)_n$-H
$R_4$-COONa

in denen:

- $R_1$ . einen Alkylphenylrest (wie Dodecylphenyl)
  . einen Alkylrest (wie Dodecyl)
  . einen 1,2-Bis(octyloxycarbonyl)ethylrest, vorzugsweise 1,2-Bis(2-ethylhexyloxycarbonyl)-ethyl darstellt,
- $R_2$ . einen Alkylrest (wie Dodecyl),
  . einen ethoxylierten Alkylphenolrest (wie ethoxyliertes Nonylphenol mit 2 bis 50 Einheiten OE),
  . einen ethoxylierten Alkylrest darstellt,
- $R_3$ . einen Alkylarylrest (wie Nonylphenyl, Alkylnaphthyl),
  . einen Alkylrest mit 8 bis 20 Kohlenstoffatomen und vorzugsweise 10 bis 14 Kohlenstoffatomen darstellt,
- n eine Zahl von 4 bis 12 ist,
- $R_4$ einen Alkylrest mit 10 bis 22 Kohlenstoffatomen darstellt,
- M Na, K, $NH_4$ oder ein Triethanolammoniumkation darstellt.

**15.** Verfahren nach einem der Ansprüche 1 bis 13, dadurch gekennzeichnet, daß die Suspension mindestens ein Netzmittel enthält, das ausgewählt ist aus Tensiden auf Silicon-Basis, wie den Copolymeren von Polydimethylsiloxan und entweder Ethylenglykol-Homopolymer oder Ethylenglykol- und Propylenglykol-Copolymer, oder aus fluorierten Tensiden, wie den Verbindungen, die eine hydrophobe und oleophobe lineare perfluorierte Hohlenstoffkette und einen hydrophilen Teil umfassen, der beispielsweise eine saure oder neutralisierte Sulfonsäuregruppe, eine Carboxylgruppe, einen ethoxylierten Alkoholrest umfaßt.

**16.** Verfahren nach einem der Ansprüche 1 bis 15, dadurch gekennzeichnet, daß die Suspension 0,05 bis 1 Gew.-%, bezogen auf das Gesamtvolumen der Suspension, und vorzugsweise 0,1 bis 0,8 Gew./Vol.-% Netzmittel enthält.